# EUROPEAN PATENT APPLICATION

(11) **EP 1 414 032 A2**
(43) Date of publication of application: **28.04.2004**
(21) Application number: 03256727.3
(22) Date of filing: 24.10.2003
(51) Int. Cl.: G11B 15/665, G11B 15/61

(54) **Tape loading device**

(30) Priority: 24.10.2002 KR 2002065236; 31.12.2002 KR 2002088237
(71) Applicant: SAMSUNG ELECTRONICS CO., LTD., Suwon-City, Kyungki-do (KR)
(72) Inventor: Oh, Jeong-hyeob, Dongan-gu Anyang-city Gyunggi-do (KR); Choi, Hyeong-seok, 250-1404, Ssangyong Apt., Suwon-city Gyunggi-do (KR); Cho, Young-ho, Suwon-city Gyunggi-do (KR)
(74) Representative: Geary, Stuart Lloyd

(57) **Abstract**

A tape loading device for a tape recorder comprises a pole base assembly 360 moveable along a deck chassis comprising a main chassis 310, and a sub chassis (320) slideable thereon. A stationary guide rail 381 and a movable guide rail 385, mounted on the main chassis and the sub chassis respectively and having different thicknesses, become inter-locked by movement of the sub chassis to take tape from a cassette during loading. An extended portion 391 is formed on the thinnest guide rail. The pole base assembly is moveable during loading/unloading of the tape by a link member 368 which is maintaining parallel to a plane of the guide rail by a protrusion 393 depending from the stationary guide rail, such as to contact a leading end of the pole base assembly when the tape is loaded. A second protrusion 395 is located between the stationary guide rail and the link member 368. Unwanted movement of the pole base assembly is prevented.

## Description

The present invention relates to a tape loading device for a tape recorder, the device comprising: a pole base assembly moveable along a deck chassis to take tape from a cassette during loading; and a guide rail mounted on the deck chassis to guide movement of the pole base assembly during loading/unloading of the tape.

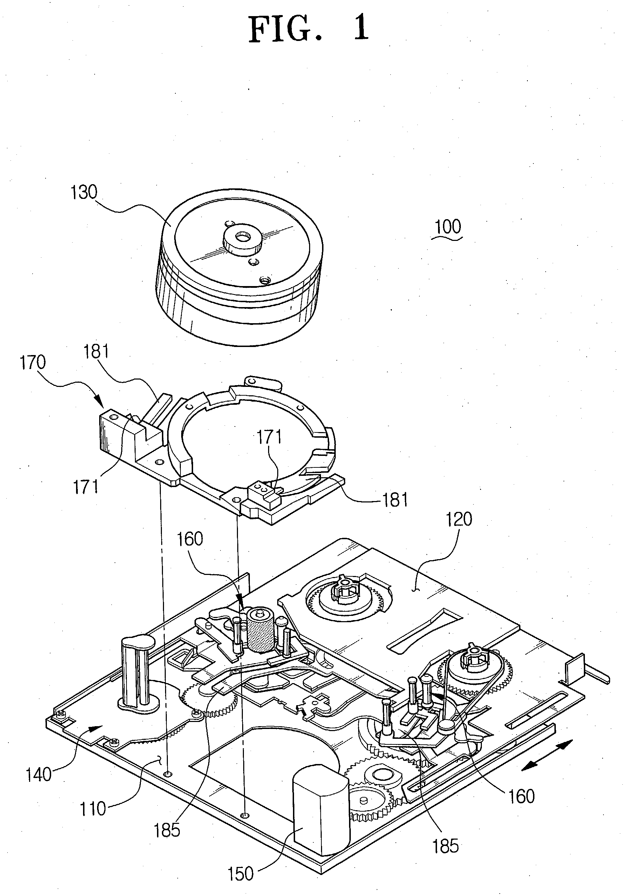

Figure 1 shows a moving deck 100 which is generally employed in a camcorder, as an example of a moving deck used in a conventional tape recorder. The moving deck 100 includes a main chassis 110, a sub chassis 120 and a tape loading device. The main chassis 110 forms a bottom of the moving deck 100, on a head drum 130, a loading motor 150 and a capstan motor 140 are mounted. The sub chassis.120 is slidably mounted on the main chassis 110, and reciprocates along the main chassis 110 during loading/unloading of the magnetic tape.

When loading a magnetic tape (not shown), the tape loading device takes the tape from a tape cassette (not shown) inserted in the moving deck 100, brings the magnetic tape into close contact with, and guides the magnetic tape so that it can run in close contact with, the head drum 130. The tape loading device includes a pole base assembly 160, and stationary and movable guide rails 181, 185.

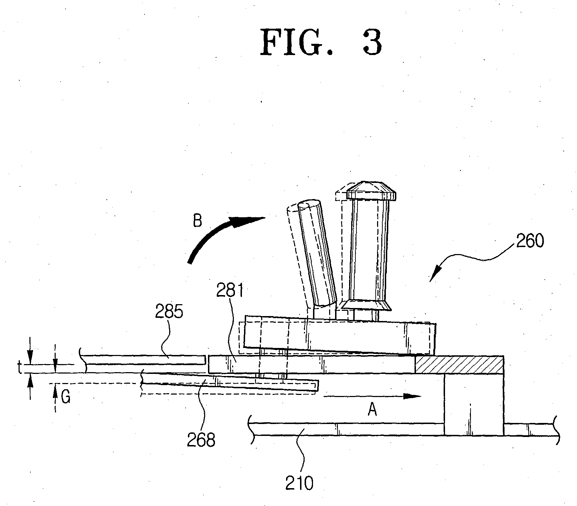

The pole base assembly 160 is mounted on the moving deck and guides the magnetic tape so that it runs in close contact with the head drum 130. Generally, there are a pair of pole base assemblies 160 in the moving deck 100, each being moved by the pressing of a link member 268 (see Figure 3) which is moved in association with the loading motor 150.

The guide rails 181, 185 guide the movement of the pole base assembly 160. More specifically, the guide rails 181, 185 include a pair of stationary guide rails 181, provided on the main chassis 120, and a pair of movable guide rails 185, provided on the sub chassis 120. The stationary and movable guide rails 181, 185 are inter-locked with each other by the movement of the sub chassis 120 during the loading of the magnetic tape, to form a movement path for the pole base assembly 160.

In the conventional moving deck 100 shown in Figure 1, a head drum base 170, which is mounted on the main chassis 110 to secure the head drum 130 with respect to the main chassis 110, is integrally formed with the guide rails 181. The movable guide rails 185 are integrally formed with the sub chassis 120.

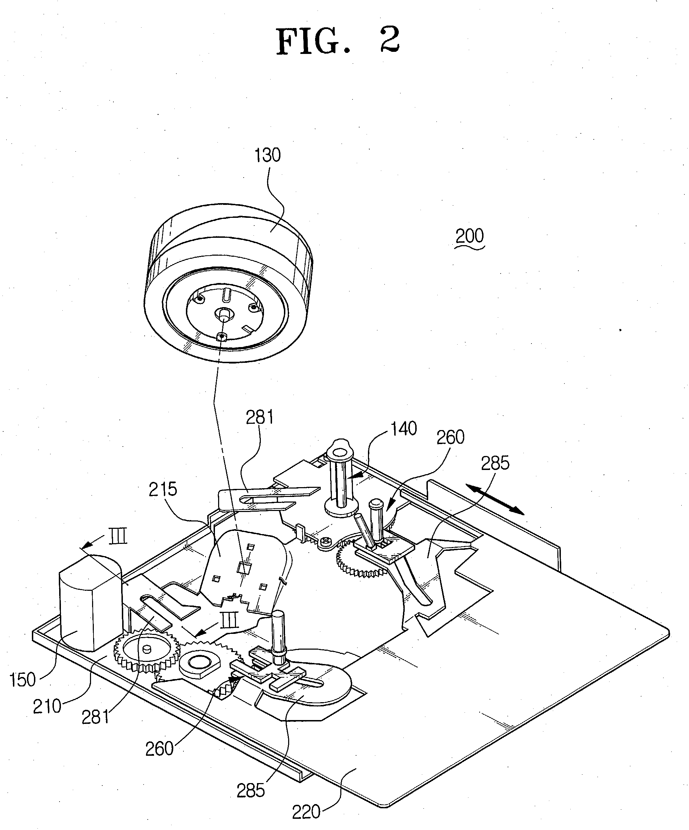

Figure 2 shows another moving deck 200, more recently introduced, in which the head drum base 170 (Figure 1) is omitted, for compactness and light-weight, and the head drum 130 is directly mounted on the main chassis 210.Here, the stationary guide rails 281 are formed by bending a portion of the main chassis 210. The sub-chassis 220, which requires less strength than the main chassis 210, is formed of a plate which is thinner than the main chassis 210. Accordingly, the stationary guide rails 281 are thicker than the movable guide rails 285. A stepped portion (t) is defined at the connecting part between the stationary and movable guide rails 281, 285. Accordingly, during loading of the magnetic tape, the pole base assembly 260 is obstructed by the stepped portion (t) in its movement from the movable guide rails 285 toward the stationary guide rails 281.

With the completion of the loading of the magnetic tape, the pole base assembly 260 would be moved by the tension of the magnetic tape running in the deck 200. In order to avoid this, the pole base assembly 260 is biased in the 'A' direction by the link member 268 even after the completion of the magnetic tape loading, which generates a moment to pivot the pole base assembly 260 in the direction 'B' of Figure 3.

The conventional deck 100 as shown in Figure 1 employs a separate support 171 to prevent the movement of the pole base assembly 160 due to the tension of the magnetic tape and the moment as mentioned above. More specifically, the support 171 is formed on the head drum base 170 and contactedly supports the pole base assembly 160 when the magnetic tape is loaded. However, in the conventional deck 200 shown in Figure 2, as the stationary guide rails 281 are formed by bending a part of the main chassis 210, the support 171 as shown in Figure 1 is omitted. Accordingly, as shown in Figure 3, movement of the pole base assembly 260 by the tension of the magnetic tape and the moment cannot be prevented, and as a result, the running of the magnetic tape cannot be guided stably.

Additionally, a movement gap G defined between the link member 268 and the guide rails 281, 285, ensures that contact between the link member 268 and the guide rails 281, 285 does not occur during movement of the pole base assembly 260, allowing it to be moved smoothly. However, because one side of the pole base assembly 260 is pressed by the link member 268 to move, a moment to pivot the pole base assembly 260 about its centre occurs, and as a result, the pole base assembly 260 is moved as much as the gap G allows.

The invention is characterised by means for restricting movement of the pole base assembly.

The invention seeks to provide an improved structure so that a pole base assembly can be guided stably and without undesirable movement when a tape is loaded/unloaded and/or when the loading/unloading of the magnetic tape is completed.

Embodiments of the present invention will now be described, by way of example only, with reference to the attached drawings, in which:
Figure 1 is a perspective view illustrating a moving deck of a conventional tape recorder;
Figure 2 is a perspective view illustrating the structure of a moving deck of another conventional tape recorder;
Figure 3 is a sectional view taken on line III-III of Figure 2, illustrating stationary and movable guide rails being connected with each other;
Figure 4 is a perspective view illustrating the structure of a moving deck of a tape recorder according to the present invention;
Figure 5 is a perspective view illustrating in detail the inner structure of the moving deck with a pole base assembly of Figure 5 in a loading position;
Figure 6 is a sectional view taken on line VI-VI of Figure 5, illustrating the magnetic tape when loaded; and
Figure 7 is a perspective view illustrating the structure of the stationary guide rail of the Figures 4 to 6 device.

In the figures, elements having the same construction and function as those of the conventional tape recorders described with reference to Figures 1 to 3 are referred to by the same reference numerals, and further description thereof is omitted.

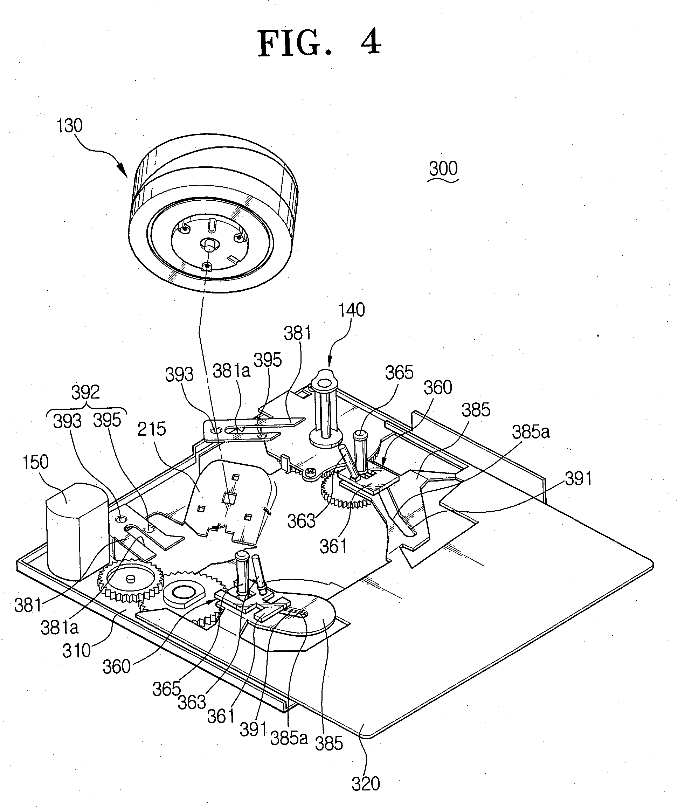

Referring to Figures 4 to 7, a tape loading device of a moving deck 300 of a tape recorder according to a preferred embodiment of the present invention includes a main chassis 310, a sub chassis 320, a pole base assembly 360, stationary and movable guide rails 381, 385, and movement prevention units 391, 392. The movement prevention units 391, 392 prevent movement of the pole base assembly 360 when the magnetic tape is loaded and unloaded and when the loading/unloading of the magnetic tape is completed.

The main chassis 310 forms a bottom surface of the moving deck 300, and the head drum 130 is mounted thereon. The stationary guide rails 381 are integrally formed with a head drum seating potion 215. The head drum seating portion 215 seats the head drum 130, and is formed by bending a part of the main chassis 310 to a predetermined angle.

The sub chassis 320 is slidably mounted on the main chassis 310, and reciprocates with the loading/unloading of the magnetic tape (not shown) with respect to the head drum 130 along the main chassis 310.

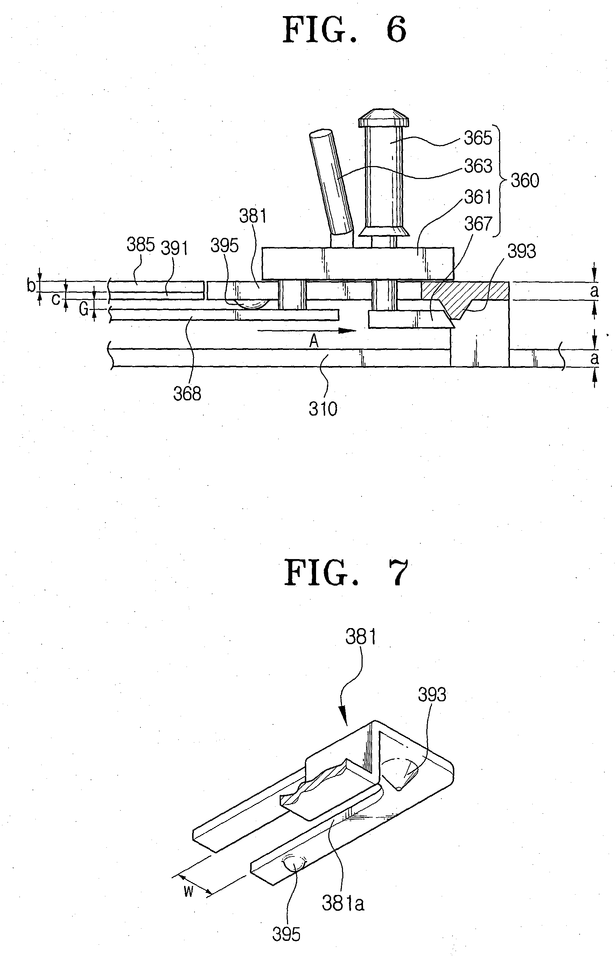

To provide compactness, the main chassis 310 and the sub chassis 320 are formed to have different thicknesses. The main chassis 310 has sufficient thickness to ensure sufficient strength to protect the internal parts of the moving deck 300. Conversely, the sub chassis 320, which is moved along the main chassis 310, is formed to have a thickness as small as possible, so that the tape recorder can be light-weight. As can best be seen from Figure 6, the main chassis 310 has a thickness (a) of or about 1 mm, and the sub chassis 320 has a thickness (b) of or about 0.6 mm, to satisfy the conditions discussed above. The main chassis 310 is formed of a metal plate, and the sub chassis 320 is preferably formed of an aluminium plate.

The pole base assembly 360 is moved along the moving deck 300, taking a magnetic tape from a tape cassette (not shown) and winding the magnetic tape around as much as a half of the outer circumference of the head drum 130. With loading completed, the pole base assembly 360 is secured at a loading position so that the magnetic tape can run in a close contact with the head drum 130. There is a pair of pole base assemblies 360 mounted on the moving deck 300, each facing one side of the head drum 130. Each pole base assembly 360 has a base member 361 moving on the moving deck 300, and a pole member 363 and a roller member 365 protruding from the upper surface of the base member 361. The pole base assembly 360 also includes a sub base 367 (see Figure 6) formed on the lower surface of the base member 361. When the loading of the magnetic tape is completed, the leading end of the sub base 367 contacts a first protrusion 393. A link member 368 is moved by the loading motor 150 thereby to move the base member 361. To ensure smooth movement of the pole base assembly 360, the link member 368 is spaced from a lower surface of the stationary and movable guide rails 381, 385 by a gap G.

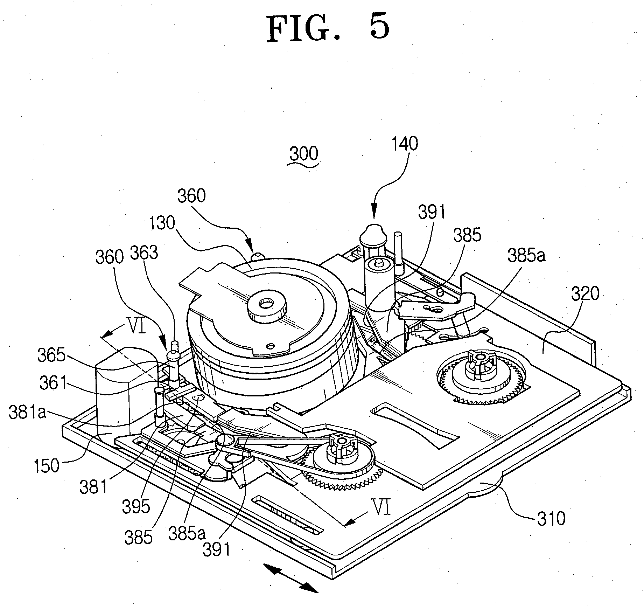

The stationary and movable guide rails 381, 385 guide the pole base assembly 360 when it is moved with the loading/unloading of the magnetic tape. A pair of each of the stationary guide rails 381 and the movable guide rails 385, is formed on the main chassis 310 and the sub chassis 320 respectively. The stationary guide rails 381 contact the movable guide rails 385 with movement of the sub chassis 320 along the main chassis 310 as the tape is loaded/unloaded. At approximately the centre of the stationary guide rail 381 and the movable guide rail 385 respectively, first and second guide grooves 381a, 385a (see Figure 5) are formed to allow sliding of the base member 361 therealong.

The stationary guide rails 381 are formed by cutting a part of the main chassis 310 and bending the cut part upwardly at least once. Accordingly, the stationary guide rail 381 has the same thickness as the main chassis 310. A gap between the lower surface of the stationary guide rail 381 and the bottom surface of the main chassis 310 is such that the magnetic tape can be closely contacted with the head drum 130 by movement of the pole member 363 of the pole base assembly 360 toward the head drum 130 and/or the roller member 365.

The movable guide rail 385 is integrally formed with and has the same thickness as the sub chassis 320.

Accordingly, the stationary guide rail 381 is thicker than the movable guide rail 385. As such, when the stationary guide rails 381 and the movable guide rails 385 are connected to form a movement path for the pole base assembly 360 during the loading of the magnetic tape, a stepped portion (like t in Figure 3) as thick as the difference between the thicknesses of the stationary and the movable guide rails 381, 385 is formed at the connecting part. In this embodiment, where the main chassis 310 has a thickness (a) of or about 1 mm, and the sub chassis 320 has a thickness (b) of or about 0.6 mm, the thickness of the stepped portion (t) at the connecting part between the stationary and the movable guide rails 381, 385 is about 0.4 mm.

In order to make up for the hindrance to the movement of the pole base assembly 360 due to the presence of the stepped portion (t) at the connection part between the stationary and the movable guide rails 381, 385, the movement prevention unit of the tape loading device according to an embodiment of the present invention further includes a thickness compensation means. The thickness compensation means includes an extended portion protruding downward from either the stationary guide rail 381 or the movable guide rail 385, whichever is the thinnest. In the example shown, the thickness compensation means 391 protrudes from the movable guide rail 385.

Movement prevention unit constitutes an extension portion 391 formed by bending and extending a side of the movable guide rail 385, i.e., bending and extending an inner rim of the second guide groove 385a downward at least once. Here, the distance (c) between the lower surface of the extended portion 391 and the lower surface of the movable guide rail 385 is the same as the thickness of the step (t, Figure 3) between the stationary and the movable guide rails 381, 385. In the embodiment shown in Figure 6, the distance (c) between the lower surface of the extended portion 391 and the lower surface of the movable guide rail 385 is 0.4 mm. The distance between the opposite sides of extended portion 391 of the movable guide rail 385 is substantially the same as the width (w, Figure 7) of the first guide groove 381a. The second guide groove 385a is formed narrower than the width (w) of the first guide groove 381a, to provide room for the extended portion 391.

With the extended portion 391 formed as described above, the pole base assembly 360 can be moved smoothly along the connecting part between the stationary and the movable guide rails 381, 385 during the loading of the magnetic tape.

Although in the embodiment described above, the extended portion 391 protrudes from the lower surface of the movable guide rail 385, this is not essential. Although not shown, if the distance from the bottom surface of the main chassis 310 to the lower surface of the movable guide rail 385 is identical to the distance from the bottom surface of the main chassis 310 to the lower surface of the stationary guide rail 381, the extended portion 391 instead protrudes upwardly of the movable guide rail 385. Furthermore, if the movable guide rail 385 is formed thicker than the stationary guide rail 381, the extended portion 391 instead is formed on the stationary guide rail 381.

Accordingly, the movement prevention unit for the tape loading device, referred to as levelling means 392 in Figure 4, prevents undesired movement by the link member 368 and the magnetic tape when the magnetic tape is loaded. In this embodiment, the levelling means 392 also includes first and second protrusions 393, 395, see Figure 7.

The first protrusion 393 contacts the pole base assembly 360, instead of the support protrusion 175 of Figure 1, when the magnetic tape is loaded. The first protrusion 393 protrudes downward from the stationary guide rail 381 to contact with the leading end of the sub base 367. It is preferable that the first protrusion 393 is integrally formed with the stationary guide rail 381. For example, the first protrusion 393 may be formed at the time of processing the pressing for the main chassis 310 so as to be formed together with the stationary guide rail 381 by the embossing.

The second protrusion 395 restricts movement of the pole base assembly 360 in the 'B' direction of Figure 3 by maintaining a movement gap (G, Figure 6) between the link member 368 and the stationary guide rail 381 during the loading/unloading of the magnetic tape, and when the loading/unloading of the magnetic tape is completed. More specifically, when the loading of the magnetic tape is completed, the second protrusion 395 prevents the pole base assembly 360 from moving upwardly when the pole base assembly 360 is at the loaded position. The second protrusion 395 depends from the upper surface of the link member 368, or alternatively from the lower surface of the guide rails 381, 385. In the latter case, the second protrusion depends from whichever of the stationary guide rail 381 and the movable guide rail 385 is opposed to the upper surface of the link member 368 when the loading of the tape is completed. Preferably, the height of the second protrusion 395 is identical to that of the movement gap (G). In one embodiment, the second protrusion 395 is formed on the lower surface of the stationary guide rail 381 by embossing. The second protrusion 395 can be formed together with the stationary guide rail 381 at the time of processing the pressing for the main chassis 310. The second protrusion 395 may instead be formed in any suitable manner having any suitable shape.

For example, the second protrusion 395 can be applied to a situation where a predetermined movement gap (G) has to be defined between the link member 368 and the guide rails 381, 385 to prevent the link member 368 contacting the guide rails 381, 385 during movement of the pole base assembly 360. Accordingly, because the movement gap (G) between the link member 368 and the guide rails 381, 385 is maintained at a substantially constant distance even in the movement of the pole base assembly 360, unwanted movement of the pole base assembly 360 is prevented.

The principles can also be applied to any other type of tape recorder, such as a video tape recorder (VTR) or a digital audio tape (DAT), both of which have a moving deck mechanism.

According to the embodiments described above, formation of the stepped portion (t, Figure 3) on the connection part between the stationary and the movable guide rails 381, 385 due to different thickness is restricted, and undesirable movement of the pole base assembly 360 after loading of the magnetic tape can also be restricted. As a result, the pole base assembly 360 moves in a stable manner during loading of the magnetic tape. Also, after the loading of the magnetic tape is complete, the magnetic tape can be run in a stable manner.

Also, in the case that the stationary and the movable guide rails 381, 385 are integrally formed on the main chassis 310 and the sub chassis 320, respectively, the thickness of the sub chassis 320 can be thinner without suffering the disadvantages of the prior art, and, as a result, the tape recorder can be made more compact. Also, the main chassis 310 can be made to take any suitable thickness.

It will be understood by those skilled in the art that the present invention is not limited to the described preferred embodiments, but that various changes and modifications may be made within the scope of the invention as defined by the appended claims.

## Claims

**1.** A tape loading device for a tape recorder, the device comprising:
a pole base assembly (360) moveable along a deck chassis (310) to take tape from a cassette during loading; and
a guide rail (381,385) mounted on the deck chassis to guide movement of the pole base assembly during loading/unloading of the tape,
**characterised by** means (392, 391) for restricting movement of the pole base assembly.

**2.** A device according to claim 1, wherein the deck chassis comprises a main chassis (310), and a sub chassis (320) slideable thereon during loading/unloading of the tape, and the guide rail comprises a stationary guide rail (381) and a movable guide rail (385), mounted on the main chassis and the sub chassis respectively, which become inter-locked by movement of the sub chassis.

**3.** A device according to claim 2, wherein the stationary guide rail and the movable guide rail have different thicknesses, and the movement prevention unit comprises a thickness compensation means (391) formed on the thinnest one of the guide rails.

**4.** A device according to claim 3, wherein the thickness compensation means comprises an extended portion which is formed by bending and extending at least once, a part of the thinnest guide rail.

**5.** A device according to claim 4, wherein the extended portion has a thickness substantially the same as the difference between the thicknesses of the guide rails.

**6.** A device according to any of claims 2 to 4, wherein the stationary guide rail is integrally formed with and has the same thickness as the main chassis.

**7.** A device according to claim 6, wherein the stationary guide rail is formed by bending a part of the main chassis at least once.

**8.** A device according to any of claims 2 to 7, wherein the movable guide rail is integrally formed with and has a thickness the same as the sub chassis.

**9.** A device according to any of claims 2 to 8, wherein the sub chassis is formed thinner than the main chassis.

**10.** A device according to any preceding claim, wherein the pole base assembly is moveable during loading/unloading of the tape by a link member (368).

**11.** A device according to claim 10, wherein the movement restriction means comprises a levelling means (395, 393) for maintaining the link member (368) parallel to a plane of the guide rail, preferably the plane of the stationary guide rail.

**12.** A device according to claim 11, wherein the levelling means comprises a protrusion (393) depending from the guide rail, preferably the stationary guide rail, such as to contact a leading end of the pole base assembly when the tape is loaded.

**13.** A device according to claim 11 or claim 12, wherein the levelling means comprises a second protrusion (395) located between the guide rail, preferably the stationary guide rail, and the link member (368).

**14.** A device according to claim 13, wherein the second protrusion depends from the guide rail.

**15.** A device according to claim 13, wherein the second protrusion is embossed on the guide rail.

**16.** A magnetic tape loading device for a tape recorder, comprising:
a pole base assembly moving along a deck chassis to take a magnetic tape from a tape cassette during a loading of the magnetic tape;
a guide rail mounted on the deck chassis to guide a movement of the pole base assembly during loading/unloading of the magnetic tape; and
a movement prevention unit for preventing a movement of the pole base assembly.

**17.** The magnetic tape loading device of claim 16, wherein the deck chassis comprises a main chassis, and a sub chassis slid along the main chassis during loading/unloading of the magnetic tape, and
the guide rail comprises a stationary guide rail and a movable guide rail mounted on the main chassis and the sub chassis, respectively, to be inter-docked with each other by the movement of the sub chassis.

**18.** The magnetic tape loading device of claim 17, wherein the stationary guide rail and the movable guide rail are formed to have different thicknesses, and the movement prevention unit comprises a thickness compensation means formed on either the stationary guide rail or the movable guide rail, whichever is relatively thinner than the other, to cause the connection part between the stationary guide rail and the movable guide rail to be level.

**4.** The magnetic tape loading device of claim 3, wherein the thickness compensation means comprises an extended portion which is formed by bending and extending at least once, a part of either the stationary guide rail or the movable guide rail, whichever is relatively thinner than the other, to a predetermined length.

**5.** The magnetic tape loading device of claim 4, wherein the extended portion has a length identical to a thickness difference between the stationary guide rail and the movable guide rail.

**6.** The magnetic tape loading device of claim 4, wherein the stationary guide rail is integrally formed with the main chassis, and has a thickness identical to that of the main chassis.

**7.** The magnetic tape loading device of claim 6, wherein the stationary guide rail is formed by bending a part of the main chassis at least once.

**8.** The magnetic tape loading device of claim 4, wherein the movable guide rail is integrally formed with the sub chassis, and has a thickness identical to that of the sub chassis.

**9.** The magnetic tape loading device of claim 4, wherein the stationary and the movable guide rails are integrally formed with the main chassis and the sub chassis, respectively, and have a thickness identical to that of the main chassis and the sub chassis, respectively.

**10.** The magnetic tape loading device of claim 9, wherein the sub chassis is formed to have a thickness smaller than that of the main chassis.

**11.** The magnetic tape loading device of claim 1, wherein, during loading/unloading of the magnetic tape, the pole base assembly is pressed, and thus moved by a link member which is connected to a side thereof.

**26.** The magnetic tape loading device of claim, wherein the movement prevention unit comprises a levelling means for restraining a movement of the link member so that the link member can maintain a parallel relation with respect to bottom surface of the guide rail during loading/unloading of the magnetic tape, and when the loading of the magnetic tape is completed.

**27.** The magnetic tape loading device of claim 12, wherein the levelling means comprises a first protrusion protruding from the guide rail to contact with a leading end of the pole base assembly when the loading of the magnetic tape is completed.

**28.** The magnetic tape loading device of claim 12, wherein the levelling means comprises a second protrusion formed between the guide rail and the link member.

**30.** The magnetic tape loading device of claim 14, wherein the second protrusion protrudes downward from the lower surface of the guide rail.

**31.** The magnetic tape loading device of claim 15, wherein the second protrusion is formed on a surface of the guide rail by embossing.

**32.** The magnetic tape loading device of claim 15, wherein the deck chassis comprises a main chassis, and a sub chassis slid along the main chassis during loading/unloading of the magnetic tape, and
the guide rail comprises a stationary guide rail and a movable guide rail mounted on the main chassis and the sub chassis, respectively, to be inter-locked with each other by the movement of the sub chassis.

**33.** The magnetic tape loading device of claim 17, wherein the second protrusion protrudes from the lower surface of either the stationary guide rail or the movable guide rail, whichever is opposed to the upper surface of the link member when the loading of the magnetic tape is completed.

**34.** The magnetic tape loading device of claim 18, wherein the stationary guide rail is formed by bending a part of the main chassis.
